# EUROPEAN PATENT SPECIFICATION

(11) **EP 4 051 914 B1**
(45) Date of publication and mention of the grant of the patent: **16.08.2023**
(21) Application number: 20789648.1
(22) Date of filing: 20.10.2020
(51) Int. Cl.: F16B 25/00, F16B 33/02, F16B 37/12

(54) **SCREW WITH AXIALLY COMPRESSIBLE THREAD**
SCHRAUBE MIT AXIAL KOMPRIMIERBAREM GEWINDE
VIS AVEC FILETAGE COMPRESSIBLE AXIALEMENT

(30) Priority: 31.10.2019 EP 19206572
(43) Date of publication of application: 07.09.2022
(73) Proprietor: Hilti Aktiengesellschaft, 9494 Schaan (LI)
(72) Inventor: SCHNEIDER, Roland, 6824 Schlins (AT)
(74) Representative: Hilti Aktiengesellschaft Corporate Intellectual Property
(86) International application number: PCT/EP2020/079422
(87) International publication number: WO 2021/083718

(56) References cited:
- EP-A2- 0 228 269
- DE-U1-202005 015 860
- GB-A- 2 163 510
- US-A- 2 520 232
- US-B1- 6 276 883

## Description

The invention relates to a screw, in particular a concrete tapping screw, according to the preamble of claim 1. A screw of this type comprises a shank having a tip, a rear end, which is located opposite the tip, and a longitudinal axis, which extends through the tip and through the rear end, and further comprises a screw thread helix, which is arranged on the shank, wherein the screw thread helix has a screw thread ridge for engaging into an internal screw thread groove, wherein the shank has a rearwardly facing abutment structure, which extends alongside the screw thread helix, for axial abutment of the screw thread helix.

DE 102015103015 A1 describes a screw for foam materials, comprising a helical wire element with variable pitch, which is attached to a head.

EP228269 A shows a screw of the prior art.

US2010247267 A1 discloses concrete screws, i.e. screws that can be tappingly screwed into a borehole in a concrete substrate. The screws of US2010247267 A1 are monolithic.

US2018283435 A1 discloses a concrete screw that has a screw thread helix which is separate from the shank. The screw thread helix is located in a helical screw thread helix receiving groove, which is provided within the shank. The screw thread helix receiving groove has an inclined rearwardly facing wedge flank. The screw thread helix receiving groove also has an inclined forwardly facing flank, but in contrast to the rearwardly-facing flank, the forwardly facing flank is relatively steep.

European patent application number 19172762.7, published late as EP3736458 A, also relates to a concrete screw having a separate screw thread helix. In this case, it is proposed to provide the screw thread helix with slots, which are intended to facilitate radial expansion.

LI, Y., PATIL, S., WINKLER, B., & NEUMAIER, T. (2013), "Numerical analysis of screw anchor for concrete", in Proc., FraMCoS-8, VIII International Conference on Fracture Mechanics of Concrete and Concrete Structures, mentions that combined concrete breakout and shear failure can be a typical failure mode of concrete screws. Concrete breakout originates along the shank, and shear failure of the remainder of the system then occurs between the concrete breakout region and the screw tip.

It is an object of the invention to provide a screw, in particular a concrete screw, which has, whilst being easy to manufacture, particularly high performance and/or which has particularly good reliability and/or versatility.

This object is achieved by a screw according to claim 1. Dependent claims refer to preferred embodiments of the invention.

According to the invention, the pitch of the screw thread ridge increases as the axial distance of the screw thread ridge from the tip increases, and the screw thread helix has axial tipward play with respect to the rearwardly facing abutment structure, so as to permit axial compression of the screw thread helix.

In connection with the invention, it was firstly found that it could be desirable to provide axial tension in the thread of a screw which is installed in a concrete substrate. This can for example be advantageous in cracked concrete and/or dynamic situations, for example since the tension may compensate related geometric changes. Further, it was found that, due to the usually relatively high lead angle of screws intended for concrete substrates, the threads of screws intended to be installed in concrete cannot be easily put under tension by torqueing alone - the high lead angle requires very high torque to achieve significant tension.

In view of this, it is proposed to provide the screw thread ridge (which is intended for engaging into the internal screw thread groove in the substrate) on a separate screw thread helix, which is separate from the shank, and to further provide the screw thread ridge initially, i.e. before screwing-in the screw into the substrate, with variable pitch, namely with rearwardly-increasing pitch. When the screw thread ridge is then screwed into a mating internal screw thread groove that has essentially constant pitch similar to the pitch of the tipward end of the screw thread ridge, more rearwardly located regions of the screw thread helix will become compressed, since the engagement of the screw thread ridge forces the pitch of the screw thread helix to adapt to the pitch of the mating internal screw thread groove. Moreover, though the shank provides a rearwardly facing abutment structure which is intended for axially rearwardly loading the screw thread helix, the screw thread helix has axial tipward play with respect to said rearwardly facing abutment structure, so that said pitch adaption of the screw thread helix with respect to the mating thread structure, and the resulting axial compression of the screw thread helix (in particular of the more rearwardly sections thereof), can be absorbed. Thus, an easy-to-manufacture design is provided to achieve the desired tension of the screw thread helix, which can improve performance, in particular in dynamic or cracked concrete scenarios.

In addition, the axial play provided can allow the screw thread helix to adapt to local variances in the mating internal screw thread groove in the substrate: Mating internal screw thread grooves often do not have "perfect" counter-geometry to the screw thread, in particular if the mating internal screw thread groove is formed by the screw itself. The imperfect geometry could potentially lead to undesirable erratic contact. The described arrangement, however, allows for compensation of imperfect mating thread geometries, which can reduce erratic contact and foster homogenous and non-localized load transfer, thereby further improving load performance.

The tip is that end of the shank which is intended to be inserted first into the hole in the substrate when the screw is installed, i.e. it is the intended leading end. Preferably, the tip is a blunt tip. The rear end and the tip, respectively, are opposite ends of the shank. A head with a screw drive might be attached to the rear end. However, the screw might also have an internal screw drive located within the shank.

Throughout this document - wherever the terms "axially", "longitudinally", "radially" or "circumferentially" are used, this should, in particular, be meant with respect to the longitudinal axis of the shank. In particular, the thread axes of the screw thread helix and/or of the screw thread ridge can be arranged coaxial with the longitudinal axis of the shank. The screw thread helix, the screw thread ridge and/or, if present, the screw thread helix receiving groove preferably wind around the longitudinal axis. The shank can be generally cylindrical, at least in regions, in particular at least remote from the tip, wherein the cylinder axis is the longitudinal axis of the shank. The screw thread helix does not have to be strictly helical in the mathematical sense. The shank is arranged within the screw thread helix. The screw thread helix surrounds the shank and winds around the shank.

The screw thread ridge is tightly fixed to the remainder of the screw thread helix. In particular, the screw thread ridge and the remainder of the screw thread helix (which remainder can for example be a back of the screw thread helix) can be monolithic. The screw thread helix can be provided with expansion slots, which cut through the screw thread ridge and define adjacent expansion fingers held together by the back of the screw thread helix. In particular, the expansion slots can originate from the forward edge of the screw thread helix and extend axially into the screw thread helix. This can facilitate radial expansion of the screw thread helix. However, the screw thread ridge can also be continuous.

The screw thread ridge forms a protrusion on the screw. The screw thread ridge is provided to engage into the internal screw thread groove, in particular arranged in the wall of a borehole. As already hinted at above, the screw thread ridge can be continuous or non-continuous, for example if expansion slots cut through the screw thread ridge. If the screw thread ridge is non-continuous, it can comprise a plurality of separate protrusions, for example ribs, which are all arranged to engage into the single, common internal screw thread groove.

The screw thread helix can have additional elements attached thereto, either monolithically or non-monolithically, for example a screw thread helix extension for fixing an end of the screw thread helix to the tip of the shank.

The abutment structure, which faces towards the rear, is intended to axially engage the screw thread helix for rearwardly loading the screw thread helix. Accordingly, tensile load can be transferred from the shank into the substrate into which the screw thread ridge is screwed in. Preferably, the screw thread helix is attached to the shank, e.g. to prevent loosing of the screw thread helix.

The pitch of an item can, in accordance with the usual definition, considered to be the axial distance between adjacent turns of said item. The pitch of the screw thread ridge becomes greater as the screw thread ridge approaches the rear end of the shank.

The screw thread helix having axial tipward play with respect to the rearwardly facing abutment structure of the shank, i.e. play directed towards the tip, can in particular imply that the rearwardly facing abutment structure is able to axially rearwardly engage the screw thread helix, but that it can do so only after the screw thread helix has moved forwardly by a certain predetermined distance relative to the rearwardly facing abutment structure and to the shank. The fact that there is axial play can imply that there is a predetermined length for unimpeded axial motion, but that this length is finite. The axial tipward play with respect to the rearwardly facing abutment structure thus, on the one hand, permits rearward sections of the screw thread helix to move axially tipwards when these sections are screwed into a mating internal screw thread groove having smaller pitch than the screw thread ridge, but, on the other hand, also provides that these rearward sections of the screw thread helix can be axially rearwardly engaged by the rearwardly facing abutment structure of the shank once the installation of the screw is completed. In the process of screwing-in, the screw thread helix is axially compressed, so as to provide the desired axial tension of the screw thread helix.

The tipward play could be provided to allow an exact equalizing of the pitch of the screw thread ridge along all of the screw thread helix. However, it could be particularly desirable that the pitch of the screw thread ridge still varies somewhat after installation, i.e. after screwing-in, for example to account for an expansion of the substrate surrounding the screw when the shank is subsequently rearwardly loaded.

It is particularly preferred that the screw thread helix is compressively preloaded. Accordingly, the free axial length of the screw thread helix is greater than the length of the screw thread helix as arranged on the shank, i.e. greater than the length of the screw thread helix after assembly of the screw. The screw thread helix is therefore axially compressed during assembly of the screw. Providing the screw thread helix with preload, or pretension, can provide particularly high tension after installing the screw, even in cases where the compression of the screw thread helix during installation is relatively small, due to a relatively small increase of the pitch of the screw thread ridge. Consequently, a particularly effective tensioning mechanism can be obtained.

It can be particularly advantageous that the tipward play increases as the axial distance of the screw thread helix from the tip increases. Accordingly, more rearwardly located sections of the screw thread helix can travel a longer axial distance before axially abutting on the shaft. This can allow particularly homogenous force transfer and/or reduce slack when tensioning the screw for the first time. More preferably, the tipward play continuously increases as the axial distance of the screw thread helix from the tip increases. Accordingly, the axial play or the gap providing that play, respectively, do not have discrete steps. This can for example be advantageous to prevent unwanted stress peaks, which can further improve performance.

It is further advantageous that the screw thread helix has axial tipward play with respect to the rearwardly facing abutment structure alongside a fraction of the screw thread helix only. In particular, the axial tipward play might be present only in more rearwardly located sections of the screw thread helix, whereas close to the tip, the screw thread helix can axially abut against the rearwardly facing abutment structure from beginning. This can be advantageous in view of particularly efficient force transfer and/or of reducing slack when tensioning the screw for the first time. However, axial tipward play with respect to the rearwardly facing abutment could be also be provided alongside all of the screw thread helix.

Preferentially, the pitch of the screw thread ridge increases continuously as the axial distance of the screw thread ridge from the tip increases. Accordingly, the pitch does not have discrete steps. This can for example counteract unwanted jamming and/or can be advantageous in view of homogenous force transfer and thus performance.

According to another preferred embodiment of the invention, the shank has a tipwardly facing flank, wherein the screw thread helix abuts against the tipwardly facing flank. A tipwardly facing flank can keep the screw thread helix in position before installation and during screwing-in of the screw, and can therefore in particular define the variable pitch of the screw thread ridge in a particular easy-to-manufacture and yet reliable manner. Preferably, the tipwardly facing flank (which faces towards the tip) can be arranged at a high flank angle with respect to the longitudinal axis of the shank, more preferably at an angle of about 90°. In particular, the tipwardly facing flank can wind around the longitudinal axis of the shank and/or be helical.

It is particular preferred that, where the screw thread helix abuts against the tipwardly facing flank, the pitch of the tipwardly facing flank increases as the axial distance of the tipwardly facing flank from the tip increases, i.e. as it approaches the rear end of the shank. Providing the tipwardly facing flank with variable pitch can be a particularly easy-to-manufacture and yet reliable way of providing the variable pitch of the screw thread ridge, for example since the position of the tipwardly facing flank can be relatively easily controlled in a rolling or cutting process. The pitch of the tipwardly facing flank increases at least where the screw thread helix abuts against the tipwardly facing flank. Further to the rear, the pitch of the tipwardly facing flank can again decrease, for example to provide an end taper, which can be advantageous in view of manufacturing and/or to avoid prominent edges. It is particularly preferred that, where the screw thread helix abuts against the tipwardly facing flank, the pitch of the tipwardly facing flank increases continuously as the axial distance of the screw thread ridge from the tip increases. A continuous increase can provide particularly homogenous force transfer.

According to another advantageous embodiment of the invention, the screw thread helix has constant ribbon width, i.e. constant width in the axial direction. This can further reduce manufacturing effort and provide a particularly efficient design.

It is particularly preferred that the rearwardly facing abutment structure is a rearwardly facing flank. This rearwardly facing flank is for axially engaging the screw thread helix and it forms an abutment for the screw thread helix. Transfer of rearwardly directed tensile load from the shank into the screw thread helix can be accomplished at the rearwardly facing flank. This can provide a mechanism that is particularly easy to manufacture, whilst being high-performing. In particular, the rearwardly facing flank can wind around the longitudinal axis of the shank and/or can be helical. The rearwardly facing flank is preferably continuous. However, it could also have interruptions. In particular, the rearwardly facing flank faces towards the rear end of the shank.

Preferentially, a gap, which is flanked by the screw thread helix and by the rearwardly facing flank, is provided between the screw thread helix and the rearwardly facing flank, wherein the gap becomes wider as the axial distance of the adjacent screw thread helix from the tip increases. This gap can provide the axial tipward play with respect to the rearwardly facing abutment structure.

The rearwardly facing flank could be arranged generally perpendicular to the longitudinal axis for tight engagement of the screw thread helix. According to a preferred embodiment, however, the rearwardly facing flank is a wedge flank for radially loading the screw thread helix as the shank is loaded rearwardly. In particular, the wedge flank can enclose an acute flank angle with the longitudinal axis, the flank angle being open towards the tip. Accordingly, the screw thread helix will be forced radially outwards, away from the longitudinal axis of the shank, where the screw thread helix is axially pushed against the rearwardly facing flank. This can provide particularly high performance, in particular in dynamic load situations and/or in cracked concrete.

Advantageously, a screw thread helix receiving groove that winds around the longitudinal axis of the shank is provided in the shank, and the screw thread helix is arranged in the screw thread helix receiving groove. This can provide a particularly robust and yet easy-to-manufacture screw. The screw thread helix receiving groove can be generally helical. The screw thread ridge can protrude radially over the screw thread helix receiving groove. In particular, the tipwardly facing flank and/or the rearwardly facing flank can delimit the screw thread helix receiving groove. More particularly, the tipwardly facing flank and the rearwardly facing flank delimit the screw thread helix receiving groove on opposite sides. The shank might have a flat groove bottom, which radially delimits thread helix receiving groove, and which interconnects the tipwardly facing flank and the rearwardly facing flank.

It is particular preferred that, where the screw thread helix receiving groove accommodates the screw thread helix, the width of the screw thread helix receiving groove increases as the axial distance of the screw thread helix receiving groove from the tip increases, i.e. as it approaches the rear end of the shank. Providing the screw thread helix receiving groove with variable width can e.g. be a particularly easy-to-manufacture and yet reliable way of providing variable tipward play for the screw thread helix, for example since the width of the screw thread helix receiving groove can be relatively easily controlled in a rolling or cutting process. The width of the screw thread helix receiving groove increases at least where the screw thread helix receiving groove accommodates the screw thread helix. Further to the rear, the width of the screw thread helix receiving groove can again decrease, for example to provide an end taper, which can be advantageous in view of manufacturing and/or to avoid prominent edges. The width of the screw thread helix receiving groove can in particular be measured parallel to the longitudinal axis of the shank.

The screw thread helix can have, preferentially, a helical back, wherein the screw thread ridge radially protrudes from the back, and wherein the back axially protrudes from the screw thread ridge towards the rear end of the shank. This back can increase design freedom and can, for example, allow to provide above-mentioned expansion slots within the screw thread helix.

Unless mentioned otherwise, the screw is described here in a pre-installation state, i.e. in a state before it is screwingly inserted into a corresponding borehole, which can in particular be a state where the screw is surrounded by ambient air throughout. Accordingly, unless mentioned otherwise, the screw thread ridge is free of any mating thread engagement and/or the screw is not externally loaded.

The screw is preferably a concrete tapping screw, i.e. the screw, in particular the screw thread helix thereof, is able to, at least partly, cut its mating internal screw thread groove in a concrete substrate. Accordingly, the internal screw thread groove, which forces the screw thread helix to compress and which enforces pitch equalisation, is cut by the screw itself, in particular by screw sections located near the tip. In particular, a ratio of the outer thread diameter of the screw thread ridge to the pitch of the screw thread ridge can be between 1 and 2, in particular between 1,2 and 1,6, at least in some regions of the screw thread ridge, more preferably at least in some regions of the screw thread ridge located near the tip. These are typical dimensions for concrete screws. Concrete cutting could e.g. be performed by the screw thread ridge or by additional cutting elements provided on the screw thread helix.

The shank is, preferably, a steel shank. Accordingly, it consists of steel, which might also be coated. Preferably, the shank is monolithic.

Preferably, the screw thread ridge consists of metal, more preferably steel, which might also be coated.

Preferably the screw thread helix consists of metal, especially steel, which might also be coated.

The invention is explained in greater detail below with reference to preferred exemplary embodiments, which are depicted schematically in the accompanying drawings. Individual features of the exemplary embodiments presented below can be implemented either individually or in any combination within the scope of the present invention.

Figure 1 is a side view of a screw before installation of the screw, i.e. in a pre-installation state.

Figure 2 is a sectional view, according to A-A in figure 1, of the screw of figure 1, before installation of the screw.

Figure 3 is a side view of the screw thread helix of the screw of figure 1, before it is attached to the screw.

Figure 4 is a sectional view similar to figure 2 of the screw of figure 1, but with the screw thread helix omitted.

Figure 5 is a side view of the screw of figure 1, but in an installed state (i.e. in a state which is present after the screwing installation of the screw in a hole in a substrate has taken place,).

Figure 6 is a sectional view, according to A-A in figure 5, of the screw of figure 1 in the installed state of figure 5.

The figures show an embodiment of a screw. The screw comprises a shank 10 having a tip 11 at its front end, and, at its opposite other end, a rear end 18. The tip 11 is that end of the shank 10 which is intended to be inserted first into a borehole. The longitudinal axis 99 of the shank 10 extends through the tip 11 and through the rear end 18.

The screw further comprises a drive 19 for transmitting torque to the shank 10 for rotating the shank 10 around the longitudinal axis 99 of the shank 10 for installing the screw. In the present embodiment, the drive 19 is a hex drive head connected to the rear end 18. However, this is an example only, and any type of drive could be used, such as a slotted drive, a cruciform drive, a lobular drive, an internal polygon drive, an external polygon drive or a special drive.

The screw furthermore comprises a screw thread helix 20, wherein the screw thread helix 20 and the shank 10 are separate elements. Both the screw thread helix 20 and the shank 10 can consist of metal, preferably of steel.

The shank 10 is provided with a helical screw thread helix receiving groove 12, which winds around the shank 10 and around the longitudinal axis 99 of the shank 10. The screw thread helix 20 is positioned in this screw thread helix receiving groove 12.

The screw thread helix 20 is a ribbon, wherein the ribbon width wₙ of the ribbon, measured parallel to the longitudinal axis 99 of the shank 10, is preferably larger than the ribbon height of the ribbon, measured perpendicular to the longitudinal axis 99 of the shank 10. The screw thread helix 20 might have non-shown additional elements connected thereto, e.g. slanted end elements for avoiding sharp ends, or elements for positioning or fixing the screw thread helix 20 on the shank 10. These additional elements might be helical or non-helical, and/or integral or non-integral with the screw thread helix 20.

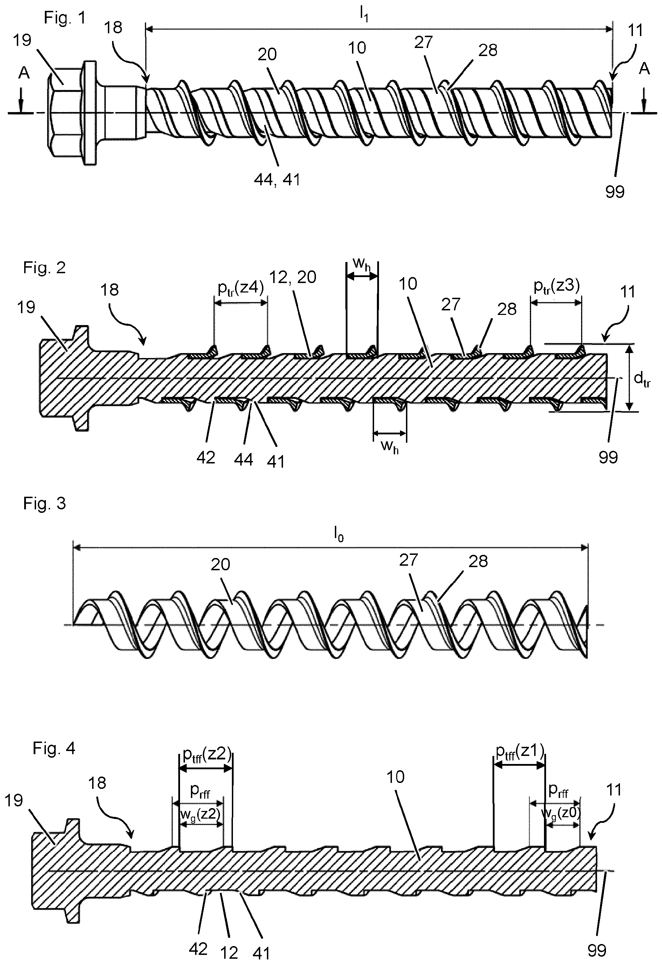

As can e.g. be taken from figure 2, the screw thread helix 20 has constant ribbon width wₕ throughout, with the ribbon width wₕ measured parallel to the longitudinal axis 99. In particular, the ribbon width wₙ can be considered to be the extent of the helically wound ribbon which forms the screw thread helix 20, measured parallel to the longitudinal axis 99.

The shank 10 has a rearwardly facing flank 41 and a tipwardly facing flank 42, which delimit opposite sides of the screw thread helix receiving groove 12. The rearwardly facing flank 41 and the tipwardly facing flank 42 border the screw thread helix receiving groove 12, and the screw thread helix receiving groove 12 is located between the rearwardly facing flank 41 and the tipwardly facing flank 42. When seen from a location within the screw thread helix receiving groove 12, the adjacent rearwardly facing flank 41 is located closer to the tip 11 than the adjacent tipwardly facing flank 42.

The rearwardly facing flank 41 thus faces rearwardly, away from the tip 11, whereas the tipwardly facing flank 42 faces forwardly, towards the tip 11. The rearwardly facing flank 41 forms a rearwardly facing abutment structure, intended for abutment of the screw thread helix 20 when the shank 10 is rearwardly loaded, and for tensile load transfer between the shank 10 and the screw thread helix 20.

The rearwardly facing flank 41 encloses an acute angle with the longitudinal axis 99, e.g. an angle of about 20°. At the rearwardly facing flank 41, the radius of the shank 10 increases as the axial distance from the tip 11 decreases. When the shank 10 is loaded relative to the screw thread helix 20 rearwardly, in the pull-out direction, i.e. in the direction pointing from the tip 11 of the shank 10 to its rear end 18, the rearwardly facing flank 41 can wedge the screw thread helix 20 to force it radially outwards, away from the longitudinal axis 99. Accordingly, in the present embodiment, the rearwardly facing flank 41 is a wedge flank for radially loading the screw thread helix 20 as the shank 10 is loaded rearwardly. In order to facilitate radial expansion of the screw thread helix 20, not-shown expansion slots can be provided in the screw thread helix 20, for intentionally weakening the screw thread helix 20.

The tipwardly facing flank 42 includes a relatively high angle with the longitudinal axis 99. In the present embodiment, the tipwardly facing flank 42 is, by way of example, arranged approximately perpendicular to the longitudinal axis 99.

The screw thread helix 20 comprises a helical back 27 and a helical screw thread ridge 28, which protrudes radially outwardly from the back 27. The screw thread ridge 28 can engage into a single, common first internal screw thread groove provided in the wall of a borehole in a substrate, in particular a concrete or masonry substrate. The screw thread ridge 28 is arranged at the forward, i.e. tipward, edge of the screw thread helix 20, so that it can be wedged by the rearwardly facing flank 41. In the present embodiment, the screw thread ridge 28 is continuous. Alternatively, it could also be discontinuous and e.g. consist of a plurality of ribs. The helical back 27 can define a friction surface, which can frictionally act against the cylindrical borehole wall.

The screw is a concrete or masonry tapping screw. Accordingly, either the screw thread ridge 28 or not-shown cutting elements, attached preferably to the screw thread helix 20 or elsewhere, are able to cut the internal screw thread groove for the screw thread ridge 28 into a concrete or masonry substrate.

As can be e.g. derived from comparing figures 3 and 1, the free axial length l₀ of the screw thread helix 20 (see figure 3) is greater than the length l₁ of the screw thread helix 20 present on the assembled, but yet non-installed screw (see figures 1 and 2). The screw thread helix 20 is therefore compressively preloaded in the assembled, but yet non-installed state of the screw shown in figures 1 and 2.

In the assembled, but yet non-installed state of the screw shown in figures 1 and 2, the screw thread helix 20 rests, at the rearwardly facing flank of the screw thread helix 20, against the tipwardly facing flank 42 of the shank 10. As can further be taken e.g. from figure 4, the tipwardly facing flank 42 has variable pitch p_{tff}, at least in the region where the screw thread helix receiving groove 12 accommodates the screw thread helix 20. In particular, the pitch p_{tff} of the tipwardly facing flank 42 increases as it approaches the rear end 18 of the shank 10 (accordingly, the pitch ptff(z2) of the tipwardly facing flank 42 at location z2 is higher than the pitch ptff(z1) of the tipwardly facing flank 42 at location z1, wherein z1 is, along the longitudinal axis 99, located closer to the tip 11 and farther from the rear end 18 than z2). Since the screw thread helix 20 rests against the tipwardly facing flank 42, since the screw thread helix 20 has constant ribbon width wₕ and since the relative position of the screw thread ridge 28 on the ribbon of the screw thread helix 20 remains constant along the screw thread helix 20, the pitch pₜᵣ of the screw thread ridge 28 also increases as it approaches the rear end 18 of the shank 10, i.e. as the axial distance of the screw thread ridge 28 from the tip 11 increases. Accordingly, the pitch pₜᵣ(z4) of the screw thread ridge 28 at location z4 is higher than the pitch pₜᵣ(z3) of the screw thread ridge 28 at location z3, wherein z3 is, along the longitudinal axis 99, located closer to the tip 11 and farther from the rear end 18 than z4. (Note that in both cases, pitch is the distance between threads, determined parallel to the longitudinal axis 99 of the shank 10. The pitch p_{tff} of the tipwardly facing flank 42 can for example be determined at the rearward edge of the tipwardly facing flank 42, which can also be the rearward edge of the screw thread helix receiving groove 12).

As can for example be taken from figure 4, the pitch p_{rff} of the rearwardly facing flank 41 is, at almost constant, at least in the region where the screw thread helix receiving groove 12 accommodates the screw thread helix 20. Since, however, the pitch p_{tff} of the tipwardly facing flank 42 increases as its distance from the tip 11 increases, the width w_{g} (measured parallel to the longitudinal axis 99 of the shank 10) of the screw thread helix receiving groove 12 (which is formed between the rearwardly facing flank 41 and the tipwardly facing flank 42) likewise increases with increasing distance from the tip 11, at least in the region where the screw thread helix receiving groove 12 accommodates the screw thread helix 20. Accordingly, the width w_{g}(z2) of the screw thread helix receiving groove 12 at location z2 is higher than the width w_{g}(z0) of the screw thread helix receiving groove 12 at location z0, wherein z0 is, along the longitudinal axis 99, located closer to the tip 11 and farther from the rear end 18 than z2. (Note that, again, pitch is the distance between threads, determined parallel to the longitudinal axis 99 of the shank 10. The pitch p_{rff} of the rearwardly facing flank 41 can for example be determined at the forward edge of the rearwardly facing flank 41, which can also be the forward edge of the screw thread helix receiving groove 12. In particular, the width w_{g} of the screw thread helix receiving groove 12 can be considered to be the extent parallel to the longitudinal axis 99 of the screw thread helix receiving groove 12, determined at the surface of the shank 10 which is interrupted by the screw thread helix receiving groove 12. In particular, the width w_{g} is the axial distance between the forward edge of the rearwardly facing flank 41 and the rearward edge of the tipwardly facing flank 42.)

The screw thread ridge 28 has an outer thread diameter dₜᵣ. At least near the tip 11 of the non-installed screw, a ratio of the outer thread diameter dₜᵣ of the screw thread ridge 28 to the pitch pₜᵣ of the screw thread ridge 28 is between 1 and 2, in particular between 1,2 and 1,6.

Since the width w_{g} of the screw thread helix receiving groove 12 increases towards the rear end 18 of the shank 10, whereas the ribbon width wₕ of the screw thread helix 20 remains constant, and since the screw thread helix 20 abuts against the tipwardly facing flank 42 before the screw is installed, a helical axial gap 44 is formed between the screw thread helix 20 and the adjacent rearwardly facing flank 41. This gap 44 provides the screw thread helix 20 with axial tipwards play, which allows that the screw thread helix 20 can be axially compressed when screwing-in the screw, namely in such a way that the pitch pₜᵣ of more rearwardly located sections of screw thread ridge 28 decreases towards smaller pitch values, which pitch values are present near the tip 11 already before installation. The gap 44 widens with increasing distance from the tip 11, i.e. as it approached the rear end 18 of the shank 10, which considers the increasing difference in pitch pₜᵣ of the screw thread ridge 28 towards the rear end 18.ln the present embodiment, the most tipward region of the screw thread helix 20 abuts both against the rearwardly facing flank 41 and against the tipwardly facing flank 42, i.e. this region does not have an associated gap 44 and therefore does not have axial play, even before the screw is installed.

When the screw is installed, the shank 10 with the screw thread helix 20 attached thereto is screwed, tip 11 first, into a generally cylindrical hole in a concrete or masonry substrate. In this process, the screw thread ridge 28 of the screw thread helix 20 starts cutting an internal screw thread groove into the wall of the hole. The pitch of this mating internal screw thread groove will be about the same as the pitch pₜᵣ of screw thread ridge 28 at the tipward end of the screw thread helix 20, since this tipward end engages the substrate first, and since this tipward end is relatively tightly held between the tipwardly facing flank 42 and the rearwardly facing flank 41.

As the screw-in depth increases, more rearwardly located regions of the screw thread ridge 28 become threaded into the internal screw thread groove which is forming in the hole wall. These more rearwardly located regions of the screw thread ridge 28 initially have pitch mismatch with respect to the internal screw thread groove (the pitch of the screw thread ridge 28 is greater there than the pitch of the internal screw thread groove). However, the axial play (provided by the rearwardly-widening gap 44 located in front of the rearwardly located regions of the screw thread helix 20) allows the rearwardly located regions of the screw thread helix 20 to move forward relative to the shank 10, and therefore allows the pitch pₜᵣ of more rearwardly located regions of the screw thread ridge 28 to adjust to the pitch of the internal screw thread groove. As a result of this pitch adjustment, the screw thread helix 20 will become axially compressed, which axial compression adds to the axial compressive preload of the screw thread helix 20 which is already present before installation of the screw.

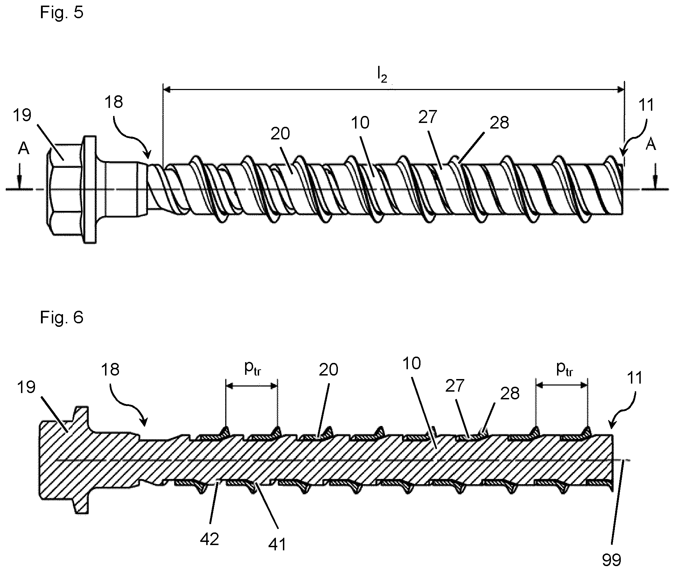

When the screw is fully installed, as shown in figures 5 and 6, the screw thread ridge 28 has finally more or less constant pitch pₜᵣ throughout, the screw thread helix 20 abuts or is at least close to abutting on the rearwardly facing flank 41 throughout, and the screw thread helix 20 is compressed to length l₂ and thereby tensioned with respect to the substrate to an amount resulting from the preloading and the additional compression caused by the pitch alignment. As a consequence, the screw thread helix 20 and the screw thread ridge 28 attached thereto have significant axial tension with respect to the surrounding substrate.

When the shank 10 is finally axially rearwardly loaded, its rearwardly facing flank 41 abuts against the screw thread helix 20, thereby transferring tensile force from the shank 10 into the screw thread helix 20, and further via the screw thread ridge 28 into the substrate. Since the screw thread helix 20 abuts or is at least close to abutting on the rearwardly facing flank 41 throughout after installation, force transfer from the rearwardly facing flank 41 into the screw thread helix 20 will be relatively uniform all along the screw thread helix 20. The significant axial tension provided between the screw thread helix 20 and the surrounding substrate can allow the system to adjust to varying conditions, for example to dynamic load situations or to non-static cracks in cracked concrete substrates.

In a preferred embodiment, the pitch p_{rff} of the rearwardly facing flank 41 is not precisely constant, but has some variations to account for different expansion of the shank 10 and the surrounding substrate, respectively, when the shank 10 is axially loaded.

## Claims

1. Screw comprising
- a shank (10) having a tip (11), a rear end (18), which is located opposite the tip (11), and a longitudinal axis (99), which extends through the tip (11) and through the rear end (18), and
- a screw thread helix (20), which is arranged on the shank (10), wherein the screw thread helix (20) has a screw thread ridge (28) for engaging into an internal screw thread groove,
- wherein the shank (10) has a rearwardly facing abutment structure, which extends alongside the screw thread helix (20), for axial abutment of the screw thread helix (20),
**characterized in that**
- the pitch (pₜᵣ) of the screw thread ridge (28) increases as the axial distance of the screw thread ridge (28) from the tip (11) increases, and
- the screw thread helix (20) has axial tipward play with respect to the rearwardly facing abutment structure, so as to permit axial compression of the screw thread helix (20).

2. Screw according to claim 1,
**characterized in that**
the screw thread helix (20) is compressively preloaded.

3. Screw according to any of the preceding claims,
**characterized in that**
the tipward play increases as the axial distance of the screw thread helix (20) from the tip (11) increases.

4. Screw according to any of the preceding claims,
**characterized in that**
the screw thread helix (20) has axial tipward play with respect to the rearwardly facing abutment structure alongside a fraction of the screw thread helix (20) only.

5. Screw according to any of the preceding claims,
**characterized in that**
the pitch (pₜᵣ) of the screw thread ridge (28) increases continuously as the axial distance of the screw thread ridge (28) from the tip (11) increases.

6. Screw according to any of the preceding claims,
**characterized in that**
the shank (10) has a tipwardly facing flank (42),
wherein the screw thread helix (20) abuts against the tipwardly facing flank (42).

7. Screw according to claim 6,
**characterized in that**
where the screw thread helix (20) abuts against the tipwardly facing flank (42), the pitch (p_{tff}) of the tipwardly facing flank (42) increases as the axial distance of the tipwardly facing flank (42) from the tip (11) increases.

8. Screw according to any of the preceding claims,
**characterized in that**
the screw thread helix (20) has constant ribbon width (wₕ).

9. Screw according to any of the preceding claims,
**characterized in that**
the rearwardly facing abutment structure is a rearwardly facing flank (41).

10. Screw according to claim 9,
**characterized in that**
the rearwardly facing flank (41) is a wedge flank for radially loading the screw thread helix (20) as the shank (10) is loaded rearwardly.

11. Screw according to any of the preceding claims,
**characterized in that**,
- a screw thread helix receiving groove (12) that winds around the longitudinal axis (99) of the shank (10) is provided in the shank (10), and
- the screw thread helix (20) is arranged in the screw thread helix receiving groove (12).

12. Screw according to claim 11,
**characterized in that**,
where the screw thread helix receiving groove (12) accommodates the screw thread helix (20), the width (w_{g}) of the screw thread helix receiving groove (12) increases as the axial distance of the screw thread helix receiving groove (12) from the tip (11) increases.

13. Screw according to any of the preceding claims,
**characterized in that**
the screw thread helix (20) has a helical back (27), wherein the screw thread ridge (28) radially protrudes from the back (27), and wherein the back (27) axially protrudes from the screw thread ridge (28) towards the rear end (18) of the shank (10).

14. Screw according to any of the preceding claims,
**characterized in that**
the screw thread ridge (28) is free of any mating thread engagement.

15. Screw according to any of the preceding claims,
**characterized in that**,
that the screw is a concrete tapping screw, and/or
that a ratio of the outer thread diameter (dₜᵣ) of the screw thread ridge (28) to the pitch (pₜᵣ) of the screw thread ridge (28) is between 1 and 2, in particular between 1,2 and 1,6, at least in some regions of the screw thread ridge (28).

## Patentansprüche

1. Schraube, umfassend
- einen Schaft (10), der eine Spitze (11), ein hinteres Ende (18), das sich gegenüber der Spitze (11) befindet, und eine Längsachse (99), die sich durch die Spitze (11) und durch das hintere Ende (18) erstreckt, aufweist, und
- eine Schraubengewindehelix (20), die am Schaft (10) angeordnet ist, wobei die Schraubengewindehelix (20) eine Schraubengewinderille (28) zum Eingreifen in eine Innenschraubengewindenut aufweist,
- wobei der Schaft (10) eine nach hinten gerichtete Anliegestruktur aufweist, die sich entlang der Schraubengewindehelix (20) zum axialen Anliegen der Schraubengewindehelix (20) erstreckt,
**dadurch gekennzeichnet, dass**
- die Steigung (pₜᵣ) der Schraubengewinderille (28) zunimmt, wenn der axiale Abstand der Schraubengewinderille (28) von der Spitze (11) zunimmt, und
- die Schraubengewindehelix (20) ein axiales spitzenseitiges Spiel in Bezug auf die nach hinten gerichtete Anliegestruktur aufweist, um einen axialen Druck der Schraubengewindehelix (20) zuzulassen.

2. Schraube nach Anspruch 1,
**dadurch gekennzeichnet, dass**
die Schraubengewindehelix (20) zusammendrückend vorgespannt ist.

3. Schraube nach einem der vorstehenden Ansprüche,
**dadurch gekennzeichnet, dass**
das spitzenseitige Spiel zunimmt, wenn der axiale Abstand der Schraubengewindehelix (20) von der Spitze (11) zunimmt.

4. Schraube nach einem der vorstehenden Ansprüche,
**dadurch gekennzeichnet, dass**
die Schraubengewindehelix (20) ein axiales spitzenseitiges Spiel in Bezug auf die nach hinten gerichtete Anliegestruktur ausschließlich neben einem Bruchteil der Schraubengewindehelix (20) aufweist.

5. Schraube nach einem der vorstehenden Ansprüche,
**dadurch gekennzeichnet, dass**
der Steigung (pₜᵣ) der Schraubengewinderille (28) kontinuierlich zunimmt, wenn der axiale Abstand der Schraubengewinderille (28) von der Spitze (11) zunimmt.

6. Schraube nach einem der vorstehenden Ansprüche,
**dadurch gekennzeichnet, dass**
der Schaft (10) eine spitzenseitig gerichtete Flanke (42) aufweist,
wobei die Schraubengewindehelix (20) an der spitzenseitig gerichteten Flanke (42) anliegt.

7. Schraube nach Anspruch 6,
**dadurch gekennzeichnet, dass**
wo die Schraubengewindehelix (20) an der spitzenseitig gerichteten Flanke (42) anliegt, die Steigung (p_{tff}) der spitzenseitig gerichteten Flanke (42) zunimmt, wenn der axiale Abstand der spitzenseitig gerichteten Flanke (42) von der Spitze (11) zunimmt.

8. Schraube nach einem der vorstehenden Ansprüche,
**dadurch gekennzeichnet, dass**
die Schraubengewindehelix (20) eine konstante Bandbreite aufweist (Wₕ).

9. Schraube nach einem der vorstehenden Ansprüche,
**dadurch gekennzeichnet, dass**
die nach hinten gerichtete Anliegestruktur eine nach hinten gerichtete Flanke (41) ist.

10. Schraube nach Anspruch 9,
**dadurch gekennzeichnet, dass**
die nach hinten gerichtete Flanke (41) eine Keilflanke zum radialen Laden der Schraubengewindehelix (20) ist, wenn der Schaft (10) nach hinten geladen ist.

11. Schraube nach einem der vorstehenden Ansprüche,
**dadurch gekennzeichnet, dass**
- eine Schraubengewindehelixaufnahmenut (12), die sich um die Längsachse (99) des Schafts (10) windet, in dem Schaft (10) bereitgestellt ist, und
- eine Schraubengewindehelix (20), die in der Schraubengewindehelixaufnahmenut (12) angeordnet ist.

12. Schraube nach Anspruch 11,
**dadurch gekennzeichnet, dass**
wo die Schraubengewindehelixaufnahmenut (12) die Schraubengewindehelix (20) aufnimmt, die Breite (w_{g}) der Schraubengewindehelixaufnahmenut (12) zunimmt, wenn der axiale Abstand der Schraubengewindehelixaufnahmenut (12) von der Spitze (11) zunimmt.

13. Schraube nach einem der vorstehenden Ansprüche,
**dadurch gekennzeichnet, dass**
die Schraubengewindehelix (20) einen spiralförmigen Rücken (27) aufweist, wobei die Schraubengewinderille (28) von der Rückseite (27) radial hervorsteht, und wobei der Rücken (27) von der Schraubengewinderille (28) in Richtung des hinteren Endes (18) des Schafts (10) axial hervorsteht.

14. Schraube nach einem der vorstehenden Ansprüche,
**dadurch gekennzeichnet, dass**
die Schraubengewinderille (28) frei von einem beliebigen Gegengewindeeingriff ist.

15. Schraube nach einem der vorstehenden Ansprüche,
**dadurch gekennzeichnet, dass**
die Schraube eine Betonbohrschraube ist, und/oder
dass ein Verhältnis des Außengewindedurchmessers (dₜᵣ) der Schraubengewinderille (28) bis zur Steigung (pₜᵣ) der Schraubengewinderille (28) zumindest in einigen Bereichen der Gewindegewinderille (28) zwischen 1 und 2, insbesondere zwischen 1,2 und 1,6, ist.

## Revendications

1. Vis comprenant
- une tige (10) ayant une pointe (11), une extrémité arrière (18), qui est située à l'opposé de la pointe (11), et un axe longitudinal (99), qui s'étend à travers la pointe (11) et à travers l'extrémité arrière (18), et
- une hélice de filetage de vis (20), qui est agencée sur la tige (10), dans laquelle l'hélice de filetage de vis (20) a un bord de filetage de vis (28) pour venir en prise dans une rainure de filetage de vis interne,
- dans laquelle la tige (10) a une structure de butée faisant face vers l'arrière, qui s'étend le long de l'hélice de filetage de vis (20), pour une butée axiale de l'hélice de filetage de vis (20),
**caractérisée en ce que**
- le pas (pₜᵣ) du bord de filetage de vis (28) augmente à mesure que la distance axiale entre le bord de filetage de vis (28) et la pointe (11) augmente, et
- l'hélice de filetage de vis (20) a un jeu de pointe axial par rapport à la structure de butée faisant face vers l'arrière, de manière à permettre une compression axiale de l'hélice de filetage de vis (20).

2. Vis selon la revendication 1,
**caractérisée en ce que**
l'hélice de filetage de vis (20) est préchargée en compression.

3. Vis selon l'une quelconque des revendications précédentes,
**caractérisée en ce que**
le jeu de pointe augmente à mesure que la distance axiale entre l'hélice de filetage de vis (20) et la pointe (11) augmente.

4. Vis selon l'une quelconque des revendications précédentes,
**caractérisée en ce que**
l'hélice de filetage de vis (20) a un jeu de pointe axial par rapport à la structure de butée faisant face vers l'arrière le long d'une fraction de l'hélice de filetage de vis (20) uniquement.

5. Vis selon l'une quelconque des revendications précédentes,
**caractérisée en ce que**
le pas (pₜᵣ) du bord de filetage de vis (28) augmente de manière continue à mesure que la distance axiale entre le bord de filetage de vis (28) et la pointe (11) augmente.

6. Vis selon l'une quelconque des revendications précédentes,
**caractérisée en ce que**
la tige (10) a un flanc faisant face vers la pointe (42),
dans laquelle l'hélice de filetage de vis (20) vient en butée contre le flanc faisant face vers la pointe (42).

7. Vis selon la revendication 6,
**caractérisée en ce que**
lorsque l'hélice de filetage de vis (20) vient en butée contre le flanc faisant face vers la pointe (42), le pas (p_{tff}) du flanc faisant face vers la pointe (42) augmente à mesure que la distance axiale entre le flanc faisant face vers la pointe (42) et la pointe (11) augmente.

8. Vis selon l'une quelconque des revendications précédentes,
**caractérisée en ce que**
l'hélice de filetage de vis (20) a une largeur de ruban constante (Wₕ).

9. Vis selon l'une quelconque des revendications précédentes,
**caractérisée en ce que**
la structure de butée faisant face vers l'arrière est un flanc faisant face vers l'arrière (41).

10. Vis selon la revendication 9,
**caractérisée en ce que**
le flanc faisant face vers l'arrière (41) est un flanc de cale pour charger radialement l'hélice de filetage de vis (20) lorsque la tige (10) est chargée vers l'arrière.

11. Vis selon l'une quelconque des revendications précédentes,
**caractérisée en ce que,**
- une rainure de réception d'hélice de filetage de vis (12) qui s'enroule autour de l'axe longitudinal (99) de la tige (10) est prévue dans la tige (10), et
- l'hélice de filetage de vis (20) est agencée dans la rainure de réception d'hélice de filetage de vis (12).

12. Vis selon la revendication 11,
**caractérisée en ce que,**
lorsque la rainure de réception d'hélice de filetage de vis (12) loge l'hélice de filetage de vis (20), la largeur (w_{g}) de la rainure de réception d'hélice de filetage de vis (12) augmente à mesure que la distance axiale entre la rainure de réception d'hélice de filetage de vis (12) et la pointe (11) augmente.

13. Vis selon l'une quelconque des revendications précédentes,
**caractérisée en ce que**
l'hélice de filetage de vis (20) a un dos hélicoïdal (27), dans laquelle le bord de filetage de vis (28) fait saillie radialement depuis le dos (27), et dans laquelle le dos (27) fait saillie axialement depuis le bord de filetage de vis (28) vers l'extrémité arrière (18) de la tige (10).

14. Vis selon l'une quelconque des revendications précédentes,
**caractérisée en ce que**
le bord de filetage de vis (28) est dépourvu de toute mise en prise de filetage homologue.

15. Vis selon l'une quelconque des revendications précédentes,
**caractérisée en ce que,**
que la vis est une vis de taraudage de béton, et/ou
qu'un rapport du diamètre de filetage externe (dₜᵣ) du bord de filetage de vis (28) au pas (pₜᵣ) du bord de filetage de vis (28) est compris entre 1 et 2, en particulier entre 1,2 et 1,6, au moins dans certaines régions du bord de filetage de vis (28).
